# EUROPÄISCHE PATENTSCHRIFT

(11) **EP 2 222 612 B1**
(45) Veröffentlichungstag und Bekanntmachung des Hinweises auf die Patenterteilung: **26.09.2012**
(21) Anmeldenummer: 08859161.5
(22) Anmeldetag: 24.11.2008
(51) Int. Cl.: C04B 24/16, C04B 24/24, C08F 220/02, C08F 220/58, C08F 222/02, C08F 226/00, E21B 33/13

(54) **COPOLYMER AUF BASIS EINER SULFONSÄURE-HALTIGEN VERBINDUNG**
COPOLYMER BASED ON A COMPOUND COMPRISING SULFONIC ACID
COPOLYMÈRE À BASE D'UN COMPOSÉ CONTENANT DE L'ACIDE SULFONIQUE

(30) Priorität: 12.12.2007 DE 102007059844
(43) Veröffentlichungstag der Anmeldung: 01.09.2010
(73) Patentinhaber: BASF SE, 67056 Ludwigshafen (DE)
(72) Erfinder: SPINDLER, Christian, 67061 Ludwigshafen (DE); ASSMANN, Andrea, 83567 Unterreit (DE); HUBER, Uwe, 84518 Garching (DE)
(74) Vertreter: Witz, Michael
(86) Internationale Anmeldenummer: PCT/EP2008/066073
(87) Internationale Veröffentlichungsnummer: WO 2009/074447

(56) Entgegenhaltungen:
- EP-A1- 1 375 818
- WO-A2-03/085013
- FR-A1- 2 698 004

## Beschreibung

Gegenstand der vorliegenden Erfindung ist ein Copolymer auf Basis einer Sulfonsäurehaltigen Verbindung.

Im bauchemischen Bereich werden Wasserretentionsmittel insbesondere in Mörtelsystemen, wie sie z. B. Fliesenkleber darstellen, eingesetzt, um das sog. Anmachwasser im Mörtelsystem halten zu können und nicht durch negative kapillare Kräfte vom Untergrund absorbieren zu lassen. Der Entzug größerer Anteile des Anmachwassers würde das Aushärten der Mörtelsysteme negativ beeinflussen und zu schlechten Produktqualitäten führen.

Im Stand der Technik sind zahlreiche Wasserretentionsmittel vorbeschrieben.

So ist bspw. aus EP 1 090 889 A1 ein Additiv für spezielle Gipse und Mörtel beschrieben, wobei Mischungen aus Ton und Guar als typische Wasserretentionsmittel erwähnt werden.

Zellulose-Derivate werden gemäß DE 195 43 304 A1 und US 5,372,642 als Wasserretentionsmittel eingesetzt. Die erwähnte deutsche Offenlegungsschrift lehrt Zusatzmittel für wasserhaltige Baustoffmischungen, die u. a. wasserlösliche Sulfonsäure-, Carbonsäure- oder Sulfatgruppen-enthaltende Cellulose-Derivate und ein Sulfonsäure- und/oder Carbonsäure-haltiges Vinyl-(Co-)Polymerisat und/oder ein Kondensationsprodukt auf Basis von Aminoplastbildnern oder Arylverbindungen und Formaldehyd beschreiben. Diese Zusatzmittel zeichnen sich durch ein gutes Wasserrückhaltevermögen und gleichzeitig ausgezeichnete Rheologie-modifizierende Eigenschaften in Baustoffmischungen auf der Basis von Zement, Kalk, Gips, Anhydrit und anderen hydraulisch abbindenden Bindemitteln aus. Das genannte US-Patent beschreibt die Verwendung von Carboxymethylethern, Methylhydroxyethylcelluloseethern oder Methylhydroxypropylcelluloseethem als Additiv zu hydratisierten Kalk und Zement enthaltenden Mischungen. Auch in diesem Fall sollen die beschriebenen Mischungen die Wasserrückhaltekapazität der bauchemischen Zusammensetzungen verbessern.

Darüber hinaus werden Mörteln oft auch Stellmittel zugesetzt, um das Abfließen des Mörtels aus auszubessernden Spalten oder von vertikalen Flächen zu verringern oder zu vermeiden. Mit Hilfe dieser Stellmittel wird die frisch zubereitete Mörtelzusammensetzung angesteift und zum Teil auch die Anhaftung am Untergrund verbessert.

EP 0 773 198 A1 beschreibt ein Verdickersystem für Baustoffgemische, ohne dabei auf Polyacrylamid zurückzugreifen. Eingesetzt wird in diesem Verdickersystem neben mind. einem Celluloseether auch mind. ein Stärkeether und mind. ein Schichtsilikat. Die vorteilhaften Eigenschaften dieses Verdickersystems sollen insbesondere in Zementfliesenklebem und Gipsspachtelmassen zum Tragen kommen. EP 0 445 653 A1 stellt eine Verdickerzusammensetzung auf Basis von Ton und einer modifizierten Cellulose vor. Als typisches Tonmineral ist Hektorit angegeben und als Cellulosevertreter Hydroxyethylcellulose. Eine Zusammensetzung aus Celluloseethern und synthetischem Hektorit ist der deutschen Offenlegungsschrift DE 195 34 719 A1 zu entnehmen. Derartige Verdickerzusammensetzungen werden für die Herstellung von Baustoffprodukten verwendet. Solche Systeme sollen sich durch gute Haftzugfestigkeitswerte, insbesondere unter Wassereinwirkung, sowie ein deutlich reduziertes Abrutschen, bspw. von vertikalen Betonplatten, auszeichnen. Weitere Verdickerkombinationen für Baustoffprodukte sind der europäischen Anmeldung EP 0 630 871 A1 zu entnehmen. Derartige Kombinationen werden ausgewählt aus in Wasser bzw. in wässrigen Tensidlösungen löslichen, nicht ionischen Celluloseethern und ausgewählten Tensiden oder Naphthalinsulfonsäure-Kondensationsprodukten. Mit derartigen Kombinationen sollen anwendungsrelevante Verbesserungen in den Verarbeitungseigenschaften von Baustoffprodukten erzielt werden können.

Bei Mörteln allgemein unterscheidet der Fachmann zwischen Gips- und Zementbasierten Systemen. Dabei ist es nach wie vor wünschenswert, Stellmittel oder Wasserretentionsmittel zur Verfügung zu haben, die in beiden Systemen eine gute Wirksamkeit zeigen. Oft werden den Mörteln weitere Additive, wie Verzögerer, Latices oder Fließmittel zugesetzt, um das Wirksamkeitsspektrum zusätzlich zu erweitern. Dabei kommt es selbstverständlich immer auf eine gute Verträglichkeit der Wasserretentions- bzw. Stellmittel auf der einen Seite und der anderen üblicherweise eingesetzten Additive auf der anderen Seite an.

Bei der Exploration und insbesondere der Bohrung nach Erdöl und Erdgas ist es erforderlich, die in Frage kommenden Gesteinsformationen gegen das Bohrloch, aber auch zu anderen Formationen hin abzudichten. Durch diese Abdichtungsmaßnahmen wird verhindert, dass Wasser oder Gas aus der Formation in das Bohrloch eindringt bzw. dass organische Fluide aus dem Bohrloch heraus in die umliegenden Gesteinsformationen hineindringen können. Oftmals besteht in diesem Zusammenhang die Gefahr, dass durch den hydrostatischen Druck der Zementsäule Wasser aus der Zementschlämme in das umgebende Gestein gepresst wird. Dies kann durch den Zusatz der sog. Fluid Loss Control Additive verhindert werden, bei denen es sich wieder um Wasserretentionsmittel handelt. Der Zusatz solcher Fluid Loss Control Additive bewirkt eine Abdichtung der sich durch geringe Wasserverluste zwischen der Zementschlämme und der Gesteinsformation ausbildenden Filterkuchen. Typische Wasserrückhaltemittel, die in diesem Zusammenhang oftmals eingesetzt werden, sind z. B. in DE 31 44 770 A1 beschrieben. Es handelt sich dabei um wasserlösliche Copolymerisate auf Basis von Vinylmonomeren. EP 0 163 459 A1 beschreibt Zementzusammensetzungen zur Verwendung bei der Zementierung von Öl-, Gas- und Wasser-Bohrlöchern. Derartige Zusammensetzungen enthalten Kondensationsprodukte von Formaldehyd mit Aceton, aber auch Aceton-haltige Verbindungen, die Natriumsulfonatgruppen-haltige Polymere beinhalten.

Aus der europäischen Anmeldung EP 1 375 818 A1 sind polymere Additive bekannt, die zur Kontrolle des sogenannten "fluid loss" eingesetzt werden können. Die in diesem Dokument beschriebenen Additive bestehen aus vier Monomeren, wobei als deren typische Vertreter Calciumsalze von 2-Acrylamido-2-methylpropansulfonsäure, das Calciumsalz von Maleinsäure sowie N-Vinylcaptrolactam und 4-Hydroxybutylvinylether genannt sind.

Aus der internationalen Patentanmeldung WO 03/085013 A2 sind wasserlösliche Copolymere auf Basis von olefinischen Sulfonsäuren, olefinsichen Dicarbonsäuren, Vinylamiden sowie Vinyl- und/oder Alkylethern und/oder Bisacryl-Derivaten bekannt sowie die Verwendung dieser Copolymere als Wasserretentionsmittel, Verdickungsmittel oder Antiseggregationsmittel für wässrige Baustoffsysteme, die Bindemittel wie Zement, Kalk, Gips, Anhydrit usw. enthalten, oder für Tonsuspensionen, vorzugsweise auf Basis von Bentonit.

Schließlich sei noch auf die französische Anmeldung FR 2 698 004 A1 verwiesen: Beschrieben sind wässrige Dispersionen für kosmetische oder dermatologische Zwecke, wobei als typischer Vertreter eines vernetzten Acrylamid/AMPS-Copolymerisats das Produkt "Sepigel 305" genannt ist. Bei diesem Sepigel 305 handelt es sich um eine auf Polyacrylamid basierte Emulsion, die zur Rheologiemodifizierung in den angegebenen kosmetischen oder dermatologischen Produkten Anwendung findet.

Neben dem Wasserrückhaltevermögen und der Stellkraft besteht ein weiteres Kriterium für frische und noch nicht ausgehärtete Zementschlämmen in deren Phasenstabilität. Bei der Herstellung von Transportbeton und Fertigbetonteilen, aber auch bei der Bohrlochzementierung werden häufig Zementschlämmen verwendet, die zu einer teilweisen Entmischung neigen. Dies führt in allen Anwendungsbereichen zu großen technischen Problemen, da sowohl die Haftung, wie auch die Dichtigkeit oft dramatisch zu wünschen übrig lassen. Aus diesem Grund wurde und wird versucht, neue Verbindungen bereit zu stellen, die zum einen ein ausgeprägtes Wasserrückhaltevermögen besitzen, außerdem die Stellkraft verbessern und schließlich die Entmischung verhindern.

In der Regel werden Zementschlämmen noch weitere Additive wie Fließmittel und Verzögerer zugegeben. Diese Additive wirken allerdings in der Regel nur dann, wenn sie an einer oder mehreren Klinkerphasen bzw. an Kristallphasen, die während der Hydratisierung des Zements entstehen, adsorbieren. Werden verschiedene Additive eingesetzt, so konkurrieren diese um die an den Kristallphasen vorhandenen Adsorbtionsstellen.

Aufgrund der geschilderten Nachteile des Standes der Technik hat sich für die vorliegende Erfindung die Aufgabe gestellt, ein neues Copolymer auf Basis einer Sulfonsäure-haltigen Verbindung bereitzustellen, welches als Additiv, insbesondere aber als Stellmittel, Antisegretationsmittel und Wasserretentionsmittel, in zementären Systemen eingesetzt werden kann. Die Wirksamkeit dieser Copolymere sollte in den genannten Einsatzgebieten stabil sein und vor allen Dingen nicht durch andere üblicherweise eingesetzte Additive negativ beeinflussbar sein.

Gelöst wurde diese Aufgabe mit Hilfe eines Copolymers, enthaltend als Monomer-Komponenten a) mindestens eine Sulfonsäure-haltige Verbindung, b) mindestens ein Stickstoff-haltiges N-Vinylamid, ein Acrylamid oder Methacrylamid, und c) mindestens einen mindestens bifunktionellen Vinylether, ausgewählt aus der Reihe Diethylenglykoldivinylether, Triethylenglykoldivinylether oder Butandioldivinylether.

Mit diesem erfindungsgemäßen Polymer konnte nicht nur die Aufgabenstellung vollständig erfüllt werden. Überraschenderweise wurde auch gefunden, dass die Copolymere nicht nur in zementären Systemen sondern auch in Gips-basierten Systemen mit Erfolg eingesetzt werden können. So zeigen die beschriebenen Copolymere ihre ausgeprägt gute Wirkung als Wasserrückhaltemittel und Stellmittel auch in Zement-freien und Gips-basierten wässrigen Systemen. Aber auch in Ton-basierten Systemen können die Polymere gemäß vorliegender Erfindung als Verdickungsmittel oder Wasserretentionsmittel eingesetzt werden. Derartige Ton-basierte Systeme finden z. B. im Schlitzwandbau oder als Bohrflüssigkeiten Verwendung.

Als besonders geeignet hat sich ein Copolymer erwiesen, welches erfindungsgemäß ein Molekulargewicht > 40.000 g/mol, vorzugsweise > 80.000 g/mol und besonders bevorzugt > 100.000 g/mol, besitzt.

Bei der Monomer-Komponente a) sollte es sich mindestens um eine Verbindung handeln, die aus der Reihe 2-Acrylamido-2-methanpropansulfonsäure (AMPS), 2-Acrylamidopropansäure, Styrolsulfonsäure, Vinylsulfonsäure, Allylhydroxypropansulfonsäure, deren geeignete Salze oder beliebige Mischungen, ausgewählt wird. Als Monomer-Komponente b) sind im Rahmen der vorliegenden Erfindung insbesondere N-Vinylcaprolactam, N-N-Dimethylacrylamid, N-N-Diethylacrylamid, Isopropylacrylamid, , N-N-Diethylacrylamid, Isopropylacrylamid, N-Vinylpyrolidon, N-Vinylacetamid, N-Vinylformamid, N-Methyl-N-Vinylacetamid, N-Alkylacrylat, N-Alkylmethacrylat sowie deren Mischungen geeignet, wobei die genannten Alkylreste unabhängig voneinander 1 bis 12 Kohlenstoffatome besitzen und auch verzweigt sein können.

Zwar können die genannten Komponenten und deren besonders geeignete Vertreter erfindungsgemäß in allen beliebigen Anteilen am beanspruchten Copolymer beteiligt sein. Jedoch hat es sich als günstig erwiesen, wenn die Monomer-Komponente a), b) und c) im Gewichtsverhältnis von 40 bis 90 %: 2 bis 40 %: 0,05 bis 5,0 % enthalten sind. Vorzugsweise beträgt das Gewichtsverhältnis 50 bis 80 : 10 bis 30 : 0,5 bis 3 Gew.-% und besonders bevorzugt 60 bis 70 % : 10 bis 20 % : 1,5 bis 2 %.

Neben dem Copolymer selbst ist von der vorliegenden Erfindung auch dessen Verwendung umfasst. Hier wird insbesondere die Verwendung der beschriebenen Copolymere als Additiv zu hydraulische Bindemittel und/oder wasserquellbare Komponenten enthaltende Zusammensetzungen beansprucht. In Frage kommt insbesondere die Verwendung als Additiv zu Zement-, CaSO₄- oder Ton-basierten Zusammensetzungen, wobei die Verwendung als Wasserretentionsmittel, Verdickungsmittel oder Stellmittel insbesondere im Vordergrund stehen.

Da die aus dem Stand der Technik bekannten Nachteile vor allem auch aus der Exploration von Erdöl- und Erdgaslagerstätten bekannt sind, umfasst die vorliegende Erfindung eine Verwendungsvariante, bei der die neuen Copolymere in Bohrlochzementschlämmen, Bohrspülungen oder Stimulationsfluiden eingesetzt werden. Diese Verwendung kann insbesondere auch in Kombination mit anderen bauchemischen Additiven, wie Rheologiemodifizierer, Abbindeverzögerer, Abbindebeschleuniger, Luftporenbildner, Hydrophobierungsmittel und deren Mischungen erfolgen.

Schließlich sieht die vorliegende Erfindung noch vor, dass das Copolymer der bauchemischen Zusammensetzung unabhängig vom jeweiligen Einsatzgebiet in einer Menge von 0,05 bis 5 Gew.-%, vorzugsweise von 0,1 bis 2,0 Gew.-% und besonders bevorzugt von 0,2 bis 1,0 Gew.-% zugesetzt wird.

Zusammenfassend kann festgestellt werden, dass das vorgeschlagene Copolymere, basierend auf den drei Monomer-Komponenten a), b) und c), sich hervorragend als Wasserrückhaltemittel, Verdickungsmittel und Stellmitteln eignet und somit sämtlichen Anforderungen genügt, die an moderne Additive im bauchemischen Bereich gestellt werden.

Die nachfolgenden Beispiele verdeutlichen die Vorteile der Copolymere innerhalb der vorgeschlagenen Anwendungsgebiete.

### 1. Herstellungsbeispiele

### Beispiel 1.1

46,5 g Calciumhydroxid wurden in 1200 g Leitungswasser eingerührt. Anschließend wurden 185 g 2-Acrylamido-2-methylpropansulfonsäure und 17,4 g Maleinsäureanhydrid zur Vorlage zugegeben. Die Lösung wurde auf 50°C erwärmt und dann wurden 26 g N-Vinylcaprolactam und 1 g Triethylenglykoldivinylether zugesetzt. Die Reaktionslösung wurde auf 62°C erwärmt, anschließend wurden 4 g 4-Hydroxybutylvinylether und 0,9 g 2,2'-Azobis(2-amidinopropan)dihydrochlorid zugesetzt. Diese Reaktionslösung wurde eine weitere halbe Stunde gerührt.

### Beispiel 1.2

Die Synthese erfolgte analog zu Beispiel 1.1, jedoch wurden 1,4 g Triethylenglykoldivinylether zugegeben.

### Beispiel 1.3

275 g Calciumhydroxid wurden in 6800 g Wasser gelöst. Anschließend wurden 1000 g 2-Acrylamido-2-methanpropansulfonsäure und 100 g Maleinsäureanhydrid zugesetzt. Nach Erwärmen der Lösung auf 50°C wurden 150 g N-Vinylcaprolactam und 1,6 g Mercaptoethanol als Kettentransferagens zugegeben. Die Reaktionslösung wurde auf 62°C erhitzt und dann 12 g Diethylenglykoldivinylether und 5 g 2, 2'-Azobis(2- amidinopropan)-dihydrochlorid zugegeben. Es wurde eine weitere halbe Stunde gerührt.

### Beispiel 1.4

25 g Calciumhydroxid wurden in 600 g Wasser gelöst und dann 92 g 2-Acrylamido-2-methanpropansulfonsäure, 8,7 g Maleinsäureanhydrid und 1,2 g Vinylphosphonsäure zugesetzt. Die Vorlage wurde auf 50°C erwärmt und 13 g N-Vinylcaprolactam zugegeben. Es wurde weiter auf 68°C erhitzt, dann 0,3 g Diethylenglykoldivinylether zugegeben und unmittelbar danach mit 0,5 g 2,2'-Azobis(2-amidinopropan)-dihydrochlorid gestartet. Die Reaktionslösung wurde eine weitere halbe Stunde gerührt.

### Beispiel 1.5

16 g Calciumhydroxid wurden in 200 mL Wasser gelöst. Anschließend wurden 61 g 2-Acrylamido-2-methanpropansulfonsäure und 4,3 g Acrylsäure zugesetzt. Die Reaktionslösung wurde auf 50°C erwärmt, 8,6 g N-Vinylcaprolactam zugegeben und die Reaktionslösung weiter auf 62°C erhitzt. Nach Erreichen dieser Temperatur wurden 1,4 g 4-Hydroxybutylvinylether und 0,3 g Triethylenglykoldivinylether zugesetzt. Unmittelbar nach Zugabe der beiden Vinylether wurde mit 0,3 g 2, 2'-Azobis(2-amidinopropan)-dihydrochlorid gestartet. Die Reaktionslösung wurde eine weitere halbe Stunde gerührt.

Beispiel 1.6:

17,3 g Calciumhydroxid wurden in 600 mL Wasser gelöst. Anschließend wurden 92 g 2-Acrylamido-2-methanpropansulfonsäure zugesetzt. Die Reaktionslösung wurde auf 50°C erwärmt, dann 13 g N-Vinylcaprolactam zugegeben und die Reaktionslösung weiter auf 62°C erhitzt. Nach Erreichen dieser Temperatur wurden 0,3 g Diiethylenglykoldivinylether zugesetzt. Unmittelbar nach Zugabe der Vinylether wurde mit 0,45 g 2, 2'-Azobis(2-amidinopropan)-dihydrochlorid gestartet. Die Reaktionslösung wurde eine weitere halbe Stunde gerührt.

### Beispiel 1.7

20,8 g Calciumhydroxid wurden in 600 mL Wasser gelöst. Anschließend wurden 92 g 2-Acrylamido-2-methanpropansulfonsäure und 6,4 g Acrylsäure zugesetzt. Die Reaktionslösung wurde auf 50°C erwärmt, 13 g N-Vinylcaprolactam zugegeben und die Reaktionslösung weiter auf 62°C erhitzt. Nach Erreichen dieser Temperatur wurden 0,3 g Diethylenglykoldivinylether zugesetzt. Unmittelbar nach Zugabe des Vinylethers wurde mit 0,45 g 2,2'-Azobis(2-amidinopropan)-dihydrochlorid gestartet. Die Reaktionslösung wurde eine weitere halbe Stunde gerührt.

### Beispiel 1.8 (Gelpolymerisation)

17,3 g Calciumhydroxid wurden in 600 mL Wasser gelöst. Anschließend wurden 92 g 2-Acrylamido-2-methanpropansulfonsäure und 18 g N,N-Dimethylacrylamid zugesetzt. Die Reaktionslösung wurde auf 50°C erwärmt, dann wurden 13 g N-Vinylcaprolactam zugegeben und die Reaktionslösung weiter auf 62°C erhitzt. Nach Erreichen dieser Temperatur wurden 0,4 g Triethylenglykoldivinylether und 0,1 g Mercaptoethanol zugesetzt. Unmittelbar nach Zugabe der Vinylether wurde mit 0,45 g 2,2'-Azobis(2-amidinopropan)-dihydrochlorid gestartet. Die Reaktionslösung wurde eine weitere halbe Stunde stehen gelassen.

### Beispiel 1.9

24,9 g Kaliumhydroxid wurden in 600 mL Wasser gelöst. Anschließend wurden 92 g 2-Acrylamido-2-methanpropansulfonsäure und 10 g Isopropylacrylamid zugesetzt. Die Reaktionslösung wurde auf 50°C erwärmt, dann wurden 13 g N-Vinylcaprolactam zugegeben und die Reaktionslösung weiter auf 62°C erhitzt. Nach Erreichen dieser Temperatur wurden 0,3 g Triethylenglykoldivinylether zugesetzt. Unmittelbar nach Zugabe der Vinylether wurde mit 0,45 g 2, 2'-Azobis(2-amidinopropan)-dihydrochlorid gestartet. Die Reaktionslösung wurde eine weitere halbe Stunde gerührt.

### Beispiel 1.10:

24,2 g Calciumhydroxid wurden in 600 g Wasser gelöst. Anschließend wurden 92 g 2-Acrylamido-2-propansulfonsäure und 8,7 g Maleinsäureanhydrid zugesetzt. Die Reaktionslösung wurde auf 50°C erwärmt. Nach dem Aufheizen wurden 11 g N-Vinylpyrrolidon zugesetzt, dann die Reaktionslösung weiter auf 62°C erwärmt. Direkt vor dem Start mit 0,45 g 2,2'-Azobis(2-amidinopropan)-dihydrochlorid wurden 0,3 g Diethylenglykoldivinylether zugesetzt. Die Reaktionslösung wurde eine weitere halbe Stunde gerührt.

### Beispiel 1.11:

24,9 g Natriumhydroxid wurden in 600 mL Wasser gelöst. Anschließend wurden 92 g 2-Acrylamido-2-methanpropansulfonsäure und 11,5 g Itaconsäure zugesetzt. Die Reaktionslösung wurde auf 50°C erwärmt, 13 g N-Vinylcaprolactam zugegeben und die Reaktionslösung weiter auf 62°C erhitzt. Nach Erreichen dieser Temperatur wurden 5 g Diethylenglykoldivinylether zugesetzt. Unmittelbar nach Zugabe der Vinylether wurde mit 0,45 g 2,2'-Azobis(2-amidinopropan)-dihydrochlorid gestartet. Die Reaktionslösung wurde eine weitere halbe Stunde gerührt.

### Beispiel 1.12:

17,8 g Natriumhydroxid wurden in 570 mL Wasser gelöst. Anschließend wurden 92 g Styrolsulfonsäure und 38,4 g einer 30-%igen wässrigen Lösung von Vinylsulfonsäure Natriumsalz zugesetzt. Die Reaktionslösung wurde auf 50°C erwärmt, dann wurden 13 g N-Vinylacetamid zugegeben und die Reaktionslösung weiter auf 62°C erhitzt. Nach Erreichen dieser Temperatur wurden 0,3 g Triethylenglykoldivinylether zugesetzt. Unmittelbar nach Zugabe der Vinylether wurde mit 0,45 g 2,2'-Azobis(2-amidino-propan)-dihydrochlorid gestartet. Die Reaktionslösung wurde eine weitere halbe Stunde gerührt.

### Beispiel 1.13:

24 g Calciumhydroxid wurden in 600 g Wasser gelöst. 92 g 2-Acrylamidopropansulfonsäure und 9,6 g Vinylphosphonsäure zugefügt. Die Reaktionslösung wurde auf 62°C erwärmt,dann 1,5 g Diethylenglykoldivinylether und 0,1 g Mercaptoethanol zugegeben. Die Polymerisation wurde mit 1,2 g Natriumpersulfat gestartet und es wurde eine weitere halbe Stunde gerührt.

### 2. Anwendungsbeispiele

### Beispiel 2.1:

Die Wirkung der erfindungsgemäßen Polymere als Antisegregationsmittel für Zementschlämmen wurde nach DIN EN 480-4 bestimmt. Hierzu wurden 1500 g Zement CEM I 42,5 R mit 900 g Leitungswasser und 7,5 g Polymer vermischt, 900 mL dieser Mischung in einen Messzylinder abgefüllt, das Blutwasser nach bestimmten Zeiten abgezogen und dessen Masse in g bestimmt. Es wurden die folgenden akkumulierten Werte erhalten (Tabelle 1):

**Tabelle 1: Blutwasserwerte für CEM I 42,5 R Zement (w/z = 0,6; 0,5 Gew.-% Polymer bezogen auf Zement)**

| Polymer aus Beispiel | Blutwasser (g) nach | | |
|---|---|---|---|
| | 10 min | 60 min | 120 min |
| - | 3,9 | 75,1 | 134,4 |
| 1.1 | 0,7 | 1,5 | 2,1 |
| 1.2 | 0,4 | 1,0 | 1,3 |
| 1.3 | 0,2 | 0,4 | 0,6 |
| 1.4 | 0,7 | 1,4 | 2,0 |
| 1.5 | 0,2 | 0,3 | 0,4 |
| 1.6 | 0,0 | 0,0 | 0,0 |
| 1.7 | 0,1 | 0,2 | 0,2 |
| 1.8 | 0,0 | 0,0 | 0,0 |
| 1.9 | 0,0 | 0,0 | 0,0 |
| 1.10 | 0,0 | 0,0 | 0,0 |
| 1.11 | 3,6 | 27,0 | 65,6 |
| 1.12 | 0,0 | 2,7 | 18,3 |
| 1.13 | 0,0 | 2,3 | 9,2 |

### Beispiel 2.2:

Die erfindungsgemäßen Polymere sind ebenfalls als Wasserretentionsmittel für Zementschlämmen geeignet. Das Wasserrückhaltevermögen der mit den erfindungsgemäßen Polymeren behandelten Zementschlämmen wurde nach DIN 18 555 bestimmt. 350 g CEM I 42,5 R Zement wurden mit 210 g Leitungswasser und 2,5 g Polymer vermischt und homogenisiert. Die erhaltenen Ergebnisse sind in Tabelle 2 dargestellt.

**Tabelle 2: Wasserrückhaltevermögen der erfindungsgemäß beschriebenen Polymere in CEM I 42,5 R Zementschlämmen**

| Polymer | Wasserrückhaltevermögen (%) |
|---|---|
| - | 64,8 |
| 1.1 | 97,2 |
| 1.2 | 98,3 |
| 1.3 | 91,5 |
| 1.4 | 96,3 |
| 1.5 | 95,2 |
| 1.6 | 95,8 |
| 1.7 | 98,2 |
| 1.8 | 97,8 |
| 1.9 | 97,0 |
| 1.10 | 97,4 |
| 1.11 | 91,9 |
| 1.12 | 83,6 |
| 1.13 | 91,7 |

### Beispiel 2.3:

Die Verdickungswirkung der erfindungsgemäßen Polymere von Zementschlämmen wurde mit Hilfe des Fließmaßes bestimmt. Als Referenz wurde eine handelsübliche Methylcellulose gewählt. Es wurden 0,75 g Polymer in 180 g Leitungswasser gelöst und anschließend 300 g Zement CEM 1 42,5 R zugegeben. Die Schlämme wurde 60 sec stehengelassen und danach 120 sec intensiv verrührt. Die Schlämme wurde in einen auf einer Glasplatte stehenden Vicat-Ring (H=40 mm, dₖₗₑᵢₙ = 65 mm, d_{gross}= 75 mm) randgleich eingegossen. Der Vicat-Ring wurde 2 cm angehoben und ca. 5 sec über der ausfließenden Schlämme gehalten. Der Durchmesser der ausgeflossenen Schlämme wurde an zwei zueinander senkrecht liegenden Achsen gemessen. Die Messung wurde einmal wiederholt. Das arithmetische Mittel aller vier Messwerte ergibt das Fließmaß. Die erhaltenen Werte sind in Tabelle 3 dargestellt.

**Tabelle 3: Fließmaß der mit den erfindungsgemäßen Polymeren behandelten CEM 1 42,5 R Zementschlämmen**

| Polymer | Fließmaß cm |
|---|---|
| - | 26,0 |
| Methylcellulose (Referenz) | 22,0 |
| 1.1 | 19,0 |
| 1.2 | 19,8 |
| 1.3 | 18,9 |
| 1.4 | 19,3 |
| 1.5 | 17,8 |
| 1.6 | 21,0 |
| 1.7 | 16,5 |
| 1.8 | 9,4 |
| 1.9 | 24,5 |
| 1.10 | 16,5 |
| 1.11 | 29,5 |
| 1.12 | 22,5 |
| 1.13 | 21,0 |

### Beispiel 2.4:

Die erfindungsgemäßen Polymere sind als Wasserretentionsmittel für Gipsleime geeignet. Das Wasserrückhaltevermögen der mit den erfindungsgemäßen Polymeren behandelten Gipsleime wurde nach DIN 18 555 bestimmt. 350 g β-Halbhydrat wurden mit 210 g Leitungswasser, 0,25 g Retardan^{®}P (Verzögerer für Gipse der Firma Tricosal, Illertissen) und 2,5 g Polymer vermischt und homogenisiert. Die erhaltenen Ergebnisse wurden gegen eine handelsübliche Methylcellulose verglichen. Die Messergebnisse sind in Tabelle 4 dargestellt.

**Tabelle 4: Wasserrückhaltevermögen der erfindungsgemäß beschriebenen Polymere in Gipsleimen**

| Polymer | Wasserrückhaltevermögen (%) |
|---|---|
| - | 73,2 |
| Methylcellulose (Referenz) | 98,7 |
| 1.1 | 94,8 |
| 1.2 | 95,3 |
| 1.3 | 95,4 |
| 1.4 | 94,6 |
| 1.5 | 96,3 |
| 1.6 | 96,9 |
| 1.7 | 98,6 |
| 1.8 | 96,8 |
| 1.9 | 97,7 |
| 1.10 | 89,9 |
| 1.11 | 89,0 |
| 1.12 | 89,2 |
| 1.13 | 92,2 |

### Beispiel 2.5:

Die Verdickungswirkung der erfindungsgemäßen Polymere in Gipsleim wurde mit Hilfe eines FANN-Rotationsviskosimeters (r_{Rotor} = 1,8415 cm, r_{Stator} = 1,7245 cm, h_{Stator} =3,800 cm, d_{Ringspalt} = 0,1170 cm, Instrumentenkonstante K = 300,0 (Feder F1)) bestimmt. Als Referenz wurde eine handelsübliche Methylcellulose gewählt. Es wurden 0,25 g Retardan^{®}P (Verzögerer für Gipse der Firma Tricosal, Illertissen) und 0,75 g Polymer in 245 g Leitungswasser gelöst und anschließend 350 g β-Halbhydrat eingerührt. Die Viskosität des Gipsleims wurde anschließend bei einem Schergradient γ̇ von 10.2 s⁻¹ gemessen. Die erhaltenen Werte sind in Tabelle 5 dargestellt.

**Tabelle 5: Viskositäten der mit den erfindungsgemäßen Polymere in Gipsleim**

| Polymer | Schubspannung τ bei γ = 10.2 s⁻¹ Pa | Viskosität ηₛ bei γ= 10.2 s⁻¹ mPas |
|---|---|---|
| - | 6,1 | 600 |
| Methylcellulose (Referenz) | 7,7 | 750 |
| 1.1 | 15,8 | 1550 |
| 1.2 | 23,0 | 2250 |
| 1.3 | 7,7 | 750 |
| 1.4 | 6,1 | 600 |
| 1.5 | 10,7 | 1050 |
| 1.6 | 15,8 | 1550 |
| 1.7 | 23,0 | 2250 |
| 1.8 | 3,1 | 300 |
| 1.9 | 10,7 | 1050 |
| 1.10 | 29,6 | 2900 |
| 1.11 | 6,1 | 600 |
| 1.12 | 10,7 | 1050 |
| 1.13 | 21,4 | 2100 |

### Beispiel 2.6:

Die oben beschriebenen Polymere wurden in verschiedenen Zementschlämmen untersucht. Alle verwendeten Zemente sind spezifiziert nach Richtlinie 10B des American Petroleum Institutes. Die Rheologie der Zementschlämme wurde mittels eines FANN 35 Viskosimeters der Firma Chandler nach der Spezifikation 10 API bestimmt. Die Ergebnisse sind in Tabelle 6 zusammengefasst. Aus der Tabelle wird klar ersichtlich, dass die erfindungsgemäßen Fluid Loss Control Additive zusammen mit weiteren, im Ölfeld verwendeten üblichen Additiven besser eingesetzt werden können als andere bereits kommerziell erhältliche Additive. Zum Vergleich wurde ein von BASF bereits unter dem Markennamen POLYTROL^{®} 34 kommerzialisiertes Fluid Loss Control Additiv auf Basis eines sulfonierten organischen Polymes herangezogen.

### Tabellen 6-11: Viskositäten und Wasserverlust verschiedener Bohrlochzementschlämmen

**Tabelle 6: Scherspannungen und Wasserverlust verschiedener Bohrlochzementschlämmen ohne weitere Additive**

| Beispiel | Temp. | Zement | Anmachwasser | Menge FLA | Rheologie bei 600-300-200-100-6-3 rpm [lbf/100sqft] | Fluid Loss |
|---|---|---|---|---|---|---|
| POLYTROL® 34 | 27°C | H | 266 g | 3,5 g | >300-220-162-94-11-7 | 25 mL |
| 1.2 | 27°C | H | 266 g | 3,5 g | 227-130-92-51-5-3 | 22 mL |
| 1.5 | 27°C | H | 266 g | 3,5 g | >300-186-135-77-7-4 | 40 mL |
| 1.3 | 80°C | H | 266 g | 3,5 g | 246-151-106-60-7-5 | 90 mL |
| 1.9 | 80°C | G | 308 g | 3,5 g | 250-181-155-115-64-62 | 346 mL |
| 1.12 | 27°C | G | 308 g | 3,5 g | 220-132-99-58-11-10 | 540 mL |

**Tabelle 7: Scherspannungen und Wasserverlust verschiedener Bohrlochzementschlämmen mit einem zusätzlichen Fließmittel auf Basis Aceton-Formaldehyd-Sulfit**

| Beispiel | Temp. | Zement | Anmachwasser | Menge FLA | zusätzl. Additiv | Rheologie bei 600-300-200-100-6-3 rpm [lbf/100sqft] | Fluid Loss |
|---|---|---|---|---|---|---|---|
| POLYTROL® 34 | 80°C | H | 266g | 3,5 g | 2,8 g AFS | 245-153-105-60-6-4 | 122 mL |
| 1.1 | 80°C | H | 266g | 3,5 g | 2,8 g AFS | 241-145-102-58-7-4 | 56 mL |
| 1.4 | 80°C | H | 266g | 3,5 g | 2,8 g AFS | 249-166-121-69-7-4 | 50 mL |
| 1.8 | 80°C | H | 266g | 3,5 g | 2,8 g AFS | >300-252-180-106-12-7 | 42 mL |
| 1.11 | 80°C | H | 266g | 3,5 g | 2,8 g AFS | 136-77-54-30-4-3 | 270 mL |

**Tabelle 8: Scherspannungen und Wasserverlust verschiedener Bohrlochzementschlämmen mit einem zusätzlichen Lignosulfonat-Verzögerer**

| Beispiel | Temp. | Zement | Anmachwasser | Menge FLA | zusätzl. Additiv | Rheologie bei 600-300-200-100-6-3 rpm [lbf/100sqft] | Fluid Loss |
|---|---|---|---|---|---|---|---|
| POLYTROL® 34 | 80°C | G | 308 g | 4,2 g | 1,2g LS | 175-113-82-49-7-4 | 104 mL |
| 1.1 | 80°C | G | 308 g | 4,2 g | 1,2 g LS | 205-136-104-67-14-12 | 72 mL |
| 1.2 | 80°C | G | 308 g | 4,2 g | 1,2 g LS | 230-148-125-72-16-11 | 65 mL |
| 1.6 | 80°C | H | 266 g | 4,2 g | 1,2 g LS | >300-245-187-119-18-13 | 85 mL |
| 1.10 | 80°C | H | 266 g | 4,2 g | 1,2 g LS | >300-223-171-109-19-13 | 68 mL |
| 1.13 | 80°C | H | 266 g | 4,2 g | 1,2 g LS | 173-105-76-44-6-5 | 280 mL |

**Tabelle 9: Scherspannungen und Wasserverlust verschiedener Bohrlochzementschlämmen mit einem zusätzlichen Lignosulfonat-Verzögerer und einem Fließmittel auf Basis Aceton-Formaldehyd-Sulfit**

| Beispiel | Temp. | Zement | Anmachwasser | Menge FLA | zusätzl. Additiv 1 | zusätzl. Additiv 2 | Rheologie bei 600-300-200-100-6-3 rpm [lbf/100sqft] | Fluid Loss |
|---|---|---|---|---|---|---|---|---|
| POLYTROL® 34 | 80°C | H | 266 g | 3,5 g | 7 g AFS | 1,2 g LS | 188-106-73-39-4-3 | 205 mL |
| 1.1 | 80°C | H | 266 g | 3,5 g | 7 g AFS | 1,2 g LS | 227-130-92-51-5-3 | 44 mL |
| 1.2 | 80°C | H | 266 g | 3,5 g | 7 g AFS | 1,2 g LS | >300-240-178-108-20-17 | 52 mL |
| 1.3 | 80°C | H | 266 g | 3,5 g | 7 g AFS | 1,2 g LS | 177-108-72-40-4-3 | 32 mL |
| 1.4 | 80°C | H | 266 g | 3,5 g | 7 g AFS | 1,2 g LS | 193-119-84-45-5-3 | 45 mL |

**Tabelle 10: Scherspannungen und Wasserverlust verschiedener Bohrlochzementschlämmen mit einem Fließmittel auf Basis Melamin-Formaldehyd-Sulfonat.**

| Beispiel | Temp. | Zement | Anmachwasser | Menge FLA | zusätzl. Additiv | Rheologie bei 600-300-200-100-6-3 rpm [lbf/100sqft] | Fluid Loss |
|---|---|---|---|---|---|---|---|
| POLYTROL® 34 | 80°C | H | 266 g | 3,5 g | 3,5g MFS | 189-111-76-42-5-4 | 262 mL |
| 1.1 | 80°C | H | 266 g | 3,5 g | 3,5 g MFS | 241-14-107-62-7-5 | 80 mL |
| 1.6 | 80°C | G | 266 g | 4,2 g | 7,0g MFS | 251-140-99-54-6-4 | 280 mL |
| 1.7 | 80°C | G | 266 g | 4,2 g | 7,0g MFS | >300-230-167-96-9-5 | 44 mL |
| 1.13 | 80°C | H | 266 g | 4,2 g | 7,0g MFS | 187-120-84-47-5-3 | 210 mL |

**Tabelle 11: Scherspannungen und Wasserverlust verschiedener Bohrlochzementschlämmen mit einem Fließmittel auf Basis Polycarboxylatether.**

| Beispiel | Temp. | Zement | Anmachwasser | Menge FLA | zusätzl. Additiv | Rheologie bei 600-300-200-100-6-3 rpm [lbf/100sqft] | Fluid Loss |
|---|---|---|---|---|---|---|---|
| POLYTROL® 34 | 80°C | H | 266 g | 3,5 g | 1,2g PCE | 247-146-108-62-6-4 | 55 mL |
| 1.4 | 80°C | H | 266 g | 3,5 g | 1,2g PCE | 216-131-95-55-6-4 | 70 mL |
| 1.8 | 80°C | H | 266 g | 3,5 g | 1,2g PCE | >300-295-238-148-20-13 | 40 mL |
| 1.9 | 80°C | H | 266 g | 3,5 g | 1,2g PCE | 228-134-98-56-5-3 | 42 mL |
| 1.10 | 80°C | H | 266 g | 3,5 g | 1,2g PCE | 231-139-102-58-6-3 | 54 mL |

| | | | | | | | |
|---|---|---|---|---|---|---|---|
| POLYTROL® 34: kommerziell erhältliches Fluid Loss Control Additiv von BASF Construction Polymers GmbH basierend auf einem sulfonierten organischen Polymer AFS: Fließmittel Kondensationsprodukt aus Aceton, Formaldehyd und Sulfit kommerziell erhältlich als Melcrete^{®} K3F von BASF Construction Polymers GmbH MFS: Fließmittel Kondensationsprodukt aus Melamin, Formaldehyd und Sulfit, kommerziell erhältlich als MELMENT^{®} F10 von BASF Construction Polymers GmbH PCE: Fließmittel basierend auf eine Polycarboxylatether kommerziell erhältlich von BASF Construction Polymers GmbH als Melflux® 1641 LS: Lignosulfonat | | | | | | | |

### Beispiel 2.7:

Die Verdickungswirkung der erfindungsgemäßen Polymere von Tonsuspensionen wurde mit Hilfe eines FANN-Rotationsviskosimeters (r_{Rotor} = 1,8415 cm, r_{Stator} = 1,7245 cm, h_{Stator} =3,800 cm, d_{Ringspalt} = 0,1170 cm, Instrumentenkonstante K = 300,0 (Feder F1)) bestimmt. Hierfür wurden 10,0 g Bentonit in 350 mL Leitungswasser suspendiert und anschließend 0,75 g Polymer zugegeben. Die Viskosität der Bentonitsuspension wurde anschließend bei einem Schergradient γ̇ von 10.2 s⁻¹ gemessen. Die erhaltenen Werte sind in Tabelle 6 dargestellt.

**Tabelle 12: Rheologie erfindungsgemäßer Tonsuspensionen**

| Polymer gemäß Beispiele 1 | Schubspannung bei γ̇=10.2 s⁻¹ Pa | Viskosität bei γ̇ =10.2s⁻¹ mPas | Schubspannung bei γ̇= 1021s⁻¹ Pa | Viskosität ηₛ bei γ̇=1021 s⁻¹ mPas |
|---|---|---|---|---|
| - | 0,5 | 50 | 2,6 | 2,5 |
| 1.1 | 1,0 | 100 | 10,2 | 10,0 |
| 1.2 | 1,5 | 150 | 14,3 | 14,0 |
| 1.3 | 1,0 | 100 | 10,7 | 10,5 |
| 1.4 | 1,5 | 150 | 9,2 | 9,0 |
| 1.5 | 1,5 | 150 | 10,7 | 10,5 |
| 1.6 | 2,0 | 200 | 10,7 | 10,5 |
| 1.7 | 1,0 | 100 | 9,2 | 9,0 |
| 1.8 | 1,0 | 100 | 7,2 | 7,0 |
| 1.9 | 1,0 | 100 | 10,7 | 10,5 |
| 1.10 | 1,5 | 150 | 8,7 | 8,5 |
| 1.11 | 0,5 | 50 | 5,1 | 5,0 |
| 1.12 | 1,0 | 100 | 7,1 | 7,0 |
| 1.13 | 1,0 | 100 | 5,1 | 5,0 |

## Patentansprüche

1. Copolymer enthaltend als Monomer-Komponenten
a) mindestens eine Sulfonsäure-haltige Verbindung,
b) mindestens ein Stickstoff-haltiges N-Vinylamid, ein Acrylamid oder Methacrylamid, und
c) mindestens einen mindestens bifunktionellen Vinylether, ausgewählt aus der Reihe Diethylenglykoldivinylether, Triethylenglykoldivinylether oder Butandioldivinylether.

2. Copolymer nach Anspruch 1, **dadurch gekennzeichnet, dass** es ein Molekulargewicht > 40.000 g/mol, vorzugsweise > 80.000 g/mol und besonders bevorzugt > 100.000 g/mol besitzt.

3. Copolymer nach einem der Ansprüche 1 oder 2, **dadurch gekennzeichnet, dass** es sich bei der Monomer-Komponente a) um mindestens eine Verbindung ausgewählt aus der Reihe 2-Acrylamido-2-methanpropansulfonsäure (AMPS), 2-Acrylamidopropansäure, Styrolsulfonsäure, Vinylsulfonsäure, Allylhydroxypropansulfonsäure oder deren Salze handelt.

4. Copolymer nach einem der Ansprüche 1 bis 3, **dadurch gekennzeichnet, dass** es sich bei der Monomer-Komponente b) um mindestens eine Verbindung ausgewählt aus der Reihe N-Vinylcaprolactam, N-N-Dimethylacrylamid, N-N-Diethylacrylamid, Isopropylacrylamid, N-Vinylpyrolidon, N-Vinylacetamid, N-Vinylformamid, N-Methyl-N-Vinylacetamid, N-Alkylacrylat oder N-Alkylmethacrylat handelt.

5. Copolymer nach einem der Ansprüche 1 bis 4, **dadurch gekennzeichnet, dass** es die Monomer-Komponenten a), b) und c) im Gewichtsverhältnis von 40 % bis 90 % : 2 bis 40 : 0,05 % bis 5,0 % enthält.

6. Verwendung des Copolymers nach einem der Ansprüche 1 bis 5 als Additiv zu hydraulische Bindemittel und/oder wasserquellbare Komponenten enthaltende Zusammensetzungen.

7. Verwendung nach Anspruch 6 als Additiv zu Zement-, CaSO₄- oder Ton-basierten Zusammensetzungen.

8. Verwendung nach einem der Ansprüche 6 oder 7 als Wasserretentionsmittel, Verdickungsmittel oder Stellmittel.

9. Verwendung nach einem der Ansprüche 6 bis 8 in Bohrlochzementschlämmen, Bohrspülungen oder Stimulationsfluiden eingesetzt wird.

10. Verwendung nach einem der Ansprüche 6 bis 9 in Kombination mit anderen bauchemischen Additiven, wie Rheologiemodifizierer, Abbindeverzögerer, Abbindebeschleuniger, Luftporenbildner, Hydrophobierungsmittel und deren Mischungen.

11. Verwendung nach einem der Ansprüche 6 bis 10, **dadurch gekennzeichnet, dass** das Copolymer der bauchemischen Zusammensetzung in einer Menge von 0,05 bis 5 Gew.-%, vorzugsweise von 0,1 bis 2 Gew.-% und besonders bevorzugt von 0,2 bis 1,0 Gew.-% zugesetzt wird.

## Claims

1. Copolymer containing, as monomer components,
a) at least one sulfonic acid-containing compound,
b) at least one nitrogen-containing N-vinylamide, one acrylamide or methacrylamide, and
c) at least one at least bifunctional vinyl ether, selected from the series consisting of diethylene glycol divinyl ether, triethylene glycol divinyl ether or butanediol divinyl ether.

2. Copolymer according to Claim 1, **characterized in that** it has a molecular weight of > 40 000 g/mol, preferably > 80 000 g/mol and particularly preferably > 100 000 g/mol.

3. Copolymer according to either of Claims 1 and 2, **characterized in that** the monomer component a) is at least one compound selected from the series consisting of 2-acrylamido-2-methylpropanesulfonic acid (AMPS), 2-acrylamidopropanesulfonic acid, styrenesulfonic acid, vinylsulfonic acid, allylhydroxypropanesulfonic acid or the salts thereof.

4. Copolymer according to any of Claims 1 to 3, **characterized in that** the monomer component b) is at least one compound selected from the series consisting of N-vinylcaprolactam, N,N-dimethylacrylamide, N,N-diethylacrylamide, isopropylacrylamide, N-vinylpyrrolidone, N-vinylacetamide, N-vinylformamide, N-methyl-N-vinylacetamide, N-alkyl acrylate or N-alkyl methacrylate.

5. Copolymer according to any of Claims 1 to 4, **characterized in that** it contains the monomer components a), b) and c) in the weight ratio of 40% to 90% : 2 to 40 : 0.05% to 5.0%.

6. Use of Copolymer according to any of Claims 1 to 5 as an additive to compositions containing hydraulic binders and/or water-swellable components.

7. Use according to Claim 6 as an additive to cement-, CaSO₄- or clay-based compositions.

8. Use according to either of Claims 6 and 7 as water retention agent, thickener or thixotropic agent.

9. Use according to any of Claims 6 to 8 in well cement slurries, drilling fluids or stimulation fluids.

10. Use according to any of Claims 6 to 9 in combination with other construction chemistry additives, such as rheology modifiers, setting retardants, setting accelerators, air-entraining agents, water repellants and mixtures thereof.

11. Use according to any of Claims 6 to 10, **characterized in that** Copolymer is added to the construction chemistry composition in an amount of from 0.05 to 5% by weight, preferably from 0.1 to 2% by weight and particularly preferably from 0.2 to 1.0% by weight.

## Revendications

1. Copolymère contenant en tant que composants monomères :
a) au moins un composé contenant de l'acide sulfonique,
b) au moins un N-vinylamide contenant de l'azote, un acrylamide ou méthacrylamide, et
c) au moins un éther de vinyle au moins bifonctionnel, choisi dans la série éther divinylique de diéthylène glycol, éther divinylique de triéthylène glycol ou éther divinylique de butanediol.

2. Copolymère selon la revendication 1, **caractérisé en ce qu'**il présente un poids moléculaire > 40 000 g/mol, de préférence > 80 000 g/mol et de manière particulièrement préférée > 100 000 g/mol.

3. Copolymère selon l'une quelconque des revendications 1 ou 2, **caractérisé en ce que** le composant monomère a) est au moins un composé choisi dans la série acide 2-acrylamido-2-méthanepropanesulfonique (AMPS), acide 2-acrylamidopropanesulfonique, acide styrènesulfonique, acide vinylsulfonique, acide allylhydroxypropanesulfonique ou leurs sels.

4. Copolymère selon l'une quelconque des revendications 1 à 3, **caractérisé en ce que** le composant monomère b) est au moins un composé choisi dans la série N-vinylcaprolactame, N,N-diméthylacrylamide, N-N-diéthylacrylamide, isopropylacrylamide, N-vinylpyrrolidone, N-vinylacétamide, N-vinylformamide, N-méthyl-N-vinylacétamide, acrylate de N-alkyle ou méthacrylate de N-alkyle.

5. Copolymère selon l'une quelconque des revendications 1 à 4, **caractérisé en ce qu'**il contient les composants monomères a), b) et c) en un rapport en poids de 40 % à 90 %:2 à 40:0,05 % à 5,0 %.

6. Utilisation du copolymère selon l'une quelconque des revendications 1 à 5 en tant qu'additif pour compositions contenant des liants hydrauliques et/ou des composants gonflant à l'eau.

7. Utilisation selon la revendication 6 en tant qu'additif pour compositions à base de ciment, de CaSO₄ ou d'argile.

8. Utilisation selon l'une quelconque des revendications 6 ou 7 en tant qu'agent de rétention de l'eau, épaississant ou agent de suspension.

9. Utilisation selon l'une quelconque des revendications 6 à 8 dans des laits de ciment pour puits, des liquides de rinçage ou des fluides de stimulation.

10. Utilisation selon l'une quelconque des revendications 6 à 9 en combinaison avec d'autres additifs chimiques de construction, tels que des modificateurs de rhéologique, des retardateurs de prise, des accélérateurs de prise, des entraîneurs d'air, des agents hydrophobants et leurs mélanges.

11. Utilisation selon l'une quelconque des revendications 6 à 10, **caractérisée en ce que** le copolymère est ajouté à la composition chimique de Construction en une quantité de 0,05 à 5 % en poids, de préférence de 0,1 à 2 % en poids et de manière particulièrement préférée de 0,2 à 1,0 % en poids.
